Europäisches Patentamt

European Patent Office

Office européen des brevets

(19)

(11) **EP 1 540 880 B1**

(12) **EUROPÄISCHE PATENTSCHRIFT**

(45) Veröffentlichungstag und Bekanntmachung des Hinweises auf die Patenterteilung:
**08.03.2006 Patentblatt 2006/10**

(51) Int Cl.:
*H04L 9/30* (2006.01)      *H04L 9/32* (2006.01)
*G06F 7/72* (2006.01)

(21) Anmeldenummer: **03753399.9**

(22) Anmeldetag: **09.09.2003**

(86) Internationale Anmeldenummer:
**PCT/EP2003/010015**

(87) Internationale Veröffentlichungsnummer:
**WO 2004/032411 (15.04.2004 Gazette 2004/16)**

(54) **GESCHÜTZTE KRYPTOGRAPHISCHE BERECHNUNG**

PROTECTED CRYPTOGRAPHIC CALCULATION

CALCUL CRYPTOGRAPHIQUE SECURISE

(84) Benannte Vertragsstaaten:
**AT BE BG CH CY CZ DE DK EE ES FI FR GB GR HU IE IT LI LU MC NL PT RO SE SI SK TR**

(30) Priorität: **11.09.2002 DE 10242061**
**31.10.2002 DE 10250810**

(43) Veröffentlichungstag der Anmeldung:
**15.06.2005 Patentblatt 2005/24**

(73) Patentinhaber: **Giesecke & Devrient GmbH**
**81677 München (DE)**

(72) Erfinder:
• **BOCKES, Markus**
**81927 München (DE)**
• **DREXLER, Hermann**
**81371 München (DE)**
• **KAHL, Helmut**
**80992 München (DE)**

(74) Vertreter: **Dendorfer, Claus et al**
**Wächtershäuser & Hartz**
**Weinstrasse 8**
**80333 München (DE)**

(56) Entgegenhaltungen:
**WO-A-01/61918**          **WO-A-03/034649**
**US-A- 5 991 415**

• **BONEH D ET AL: "On the importance of checking cryptographic protocols for faults" 1997 , ADVANCES IN CRYPTOLOGY- EUROCRYPT. INTERNATIONAL CONFERENCE ON THE THEORY AND APPLICATION OF CRYPTOGRAPHIC TECHNIQUES, SPRINGER VERLAG, DE, PAGE(S) 37-51 XP002202745 Seite 49, Zeile 28 - Zeile 30 Seite 50, Zeile 13 - Zeile 14**

**Beschreibung**

Die Erfindung betrifft allgemein das technische Gebiet der Kryptographie und spezieller eine Vorgehensweise zum verbesserten Schutz einer kryptographischen Berechnung gegen Angriffe. Insbesondere ist die Erfindung zum Einsatz in tragbaren Datenträgern vorgesehen, die z.B. als Chipkarten (smart cards) in unterschiedlichen Bauformen oder als Chipmodule ausgestaltet sein können.

Für den Austausch von verschlüsselten und/ oder signierten Daten ist das z.B. im US-Patent 4,405,829 beschriebene RSA-Verfahren gut bekannt. Gemäß dem RSA-Verfahren wird ein öffentlicher Schlüssel zur Verschlüsselung oder Signaturverifikation und ein geheimer privater Schlüssel zur Entschlüsselung oder Signaturerzeugung eingesetzt. Die Sicherheit des RSA-Verfahrens beruht auf der Tatsache, daß gegenwärtig kein effizienter Weg bekannt ist, um die Primfaktoren p und q einer großen Zahl n mit n=p·q zu bestimmen. Während der sogenannte Modulus n als Teil des öffentlichen Schlüssels veröffentlicht wird, müssen die Werte p und q geheim gehalten werden.

Die zur Ausführung des RSA-Verfahrens erforderlichen Berechnungsvorgänge sind relativ aufwendig. So müssen z.B. bei der Entschlüsselung oder Signaturerzeugung die zu verarbeitenden Daten mit Parametern des privaten Schlüssels potenziert werden. Insbesondere für tragbare Datenträger mit ihrer beschränkten Rechenleistung wird daher häufig eine Implementierung des RSA-Verfahrens zur Entschlüsselung oder Signaturerzeugung eingesetzt, die den Chinesischen Restklassensatz (CRT = Chinese remainder theorem) verwendet und daher auch als RSA-CRT-Verfahren bezeichnet wird. Durch Verwendung des RSA-CRT-Verfahrens wird der erforderliche Rechenaufwand ungefähr um den Faktor 4 reduziert.

Das RSA-CRT-Verfahren sieht vor, statt einer aufwendigen Potenzberechnung zwei erheblich einfachere Potenzierungen durchzuführen, deren Ergebnisse dann zu den entschlüsselten Daten oder der erzeugten Signatur kombiniert werden. In die erste dieser Berechnungen geht nur der geheime Primfaktor p ein, und in die zweite Berechnung geht nur der geheime Primfaktor q ein.

Es sind Angriffsszenarien vorgeschlagen worden, bei denen genau einer der beiden genannten RSA-CRT-Berechnungszweige gestört wird, z.B. durch gezielte Einwirkung von Wärme oder Strahlung oder durch elektrische Impulse. Wenn dies gelingt, läßt sich aus dem Ergebnis der Gesamtberechnung ein Vielfaches desjenigen Primfaktors p, q ableiten, dessen Berechnungszweig nicht gestört wurde. Mit anderen Worten lassen sich durch den beschriebenen Angriff Rückschlüsse auf den privaten Schlüssel ziehen. Dies hat potentiell katastrophale Konsequenzen, weil nicht nur die gerade durchgeführte Entschlüsselung oder Signaturerzeugung, sondern alle unter Verwendung des privaten Schlüssels ausgeführten kryptographischen Operationen kompromittiert werden.

Der gerade erwähnte Angriff ist unter den Namen "fault attack" oder "Bellcore attack" bekannt und z.B. in Spalte 4 des US-Patents 5,991,415 beschrieben. Ebenfalls im US-Patent 5,991,415 wird ein Verfahren offenbart, bei dem zum Schutz gegen diesen während der kryptographischen Berechnung erfolgenden Angriff ein zusätzlicher Faktor j in die Berechnung eingeht. Es bestehen jedoch, wie im folgenden gezeigt werden wird, weiterhin Angriffsmöglichkeiten, denen mit dem aus dem US-Patent 5,991,415 bekannten Verfahren nicht entgegengetreten werden kann.

Besonders kritisch ist die genannte Angriffsmöglichkeit dann, wenn die kryptographische Berechnung von einem Prozessor eines tragbaren Datenträgers, beispielsweise einer Chipkarte (smart card) oder eines Chipmoduls, ausgeführt wird. Ein erster Grund dafür ist, daß solche tragbaren Datenträger oft für sicherheitskritische Anwendungen verwendet werden, z.B. im Zusammenhang mit Finanztransaktionen, der Zugangskontrolle oder der Signatur von rechtlich bindenden Dokumenten. Zweitens befinden sich tragbare Datenträger, während die kryptographische Berechnung ausgeführt wird, typischerweise im Besitz des Angreifers, so daß dieser alle Möglichkeiten zum Beeinflussen der Berechnung und zum Ausspähen der Berechnungsergebnisse hat.

Ein weiterer Schutzmechanismus gegen Angriffe durch Fehlerinduzierung ist in dem Dokument WO 01/61918 A1 offenbart. Das besagte Dokument beschreibt ein kryptographisches Verfahren, bei dem zwei Schlüssel K1 und K2 mit einer Prüfsumme S gesichert werden. Es handelt sich dabei gemäß Seite 44, Zeilen 34 - 37 um eine HMAC-SHA1-Prüfsumme. Das oben genannte Dokument WO 01/61918 A1 offenbart jedoch keine Verwendung eines Schlüssels mit mindestens zwei Schlüsselparametern und keinen Schutz gegen einen kryptographischen Angriff, bei dem durch eine Verfälschung eines ersten Schlüsselparameters Rückschlüsse auf einen zweiten Schlüsselparameter gezogen werden. Ferner offenbart das Dokument nicht, daß die Integritätsüberprüfung eine Teilbarkeitsprüfung beinhaltet.

Ein weiterer Schutzmechanismus, der darauf abzielt, dieselbe Aufgabenstellung wie die Anmeldung zu lösen, ist aus der Veröffentlichung WO 03/034649 A2 bekannt. Die besagte Veröffentlichung fällt unter Art. 54 (3) EPC. Obgleich die Integritätsüberprüfung des in der Veröffentlichung WO 03/034649 A2 beschriebenen kryptographischen Verfahrens auch eine Teilbarkeitsprüfung beinhaltet, unterscheidet sich das besagte Verfahren dadurch von dem im Anspruch 1 beanspruchten Verfahren, daß gemäß des Dokumentes WO 03/034649 A2 mindestens ein Sicherungswert ein Produkt eines Schlüsselparameters mit einer Primzahl ist. Keiner der in der oben genannten Veröffentlichung genutzten Schlüsselparameter ist das Produkt eines für das kryptographische Verfahren benötigten Wertes mit einem Sicherungswert.

Die Erfindung hat die Aufgabe, eine Technik zum besonders guten Schutz kryptographischer Berechnungen gegen Angriffe bereitzustellen. Insbesondere sollen solche Angriffe verhindert werden, die auf ähnlichen Prinzipien wie der oben beschriebene "Bellcore attack" beruhen. In bevorzugten Ausgestaltungen soll der erfindungsgemäße Schutz vorteilhaft mit anderen Schutzverfahren zusammenwirken.

Erfindungsgemäß wird diese Aufgabe ganz oder zum Teil gelöst durch ein Verfahren zum geschützten Ausführen einer kryptographischen Berechnung mit den Merkmalen des Anspruchs 1, ein Verfahren zum Bestimmen eines Schlüssels für eine kryptographische Berechnung mit den Merkmalen des Anspruchs 12, ein Computerprogrammprodukt gemäß Anspruch 14 und einen tragbaren Datenträger gemäß Anspruch 15. Die abhängigen Ansprüche definieren bevorzugte Ausgestaltungen der Erfindung. Die Aufzählungsreihenfolge der Verfahrensschritte in den Ansprüchen soll nicht als Einschränkung des Schutzbereichs aufgefaßt werden; es sind vielmehr Ausgestaltungen der Erfindung vorgesehen, bei denen diese Verfahrensschritte ganz oder teilweise in anderer Reihenfolge oder ganz oder teilweise parallel oder ganz oder teilweise ineinander verzahnt (interleaved) ausgeführt werden.

Die Erfindung geht von der grundlegenden Erkenntnis aus, daß ein Angriff ähnlich dem oben beschriebenen "Bellcore attack" nicht nur durch Störung der Berechnungsvorgänge während der kryptographischen Berechnung möglich ist, sondern auch dadurch, daß die kryptographische Berechnung mit fehlerhaften Parametern versorgt wird. Dies kann beispielsweise durch die Übergabe einer falschen Zeigeradresse an die Berechnungsroutine erfolgen, oder dadurch, daß der Inhalt von Speicherfeldern, in denen Schlüsselparameter enthalten sind, von außen geändert wird. Die Erfinder haben erkannt, daß aus dem Ergebnis einer kryptographischen Berechnung, die mit derartig verfälschten Parametern versorgt wird, möglicherweise Rückschlüsse auf geheimzuhaltende Schlüsselparameter gezogen werden können.

Erfindungsgemäß ist vorgesehen, zum Schutz gegen einen solchen Angriff eine Integritätsüberprüfung des für die kryptographische Berechnung herangezogenen Schlüssels auszuführen. Durch diese Maßnahme kann der Angriff erkannt und abgewehrt werden, indem z.B. die kryptographische Berechnung ohne Ausgabe eines Ergebnisses abgebrochen wird. Die Integritätsüberprüfung kann eine Manipulation der Schlüsselparameter in der Regel nicht mit absoluter Sicherheit ausschließen; sie soll jedoch einen für praktische Zwecke ausreichenden Schutz gegen den genannten Angriff bieten. Dies impliziert, daß eine einfache Wertebereichsüberwachung (range check) mit einer festen unteren Grenze und einer festen oberen Grenze nicht als Integritätsprüfung im Sinne der vorliegenden Erfindung anzusehen wäre.

Vorzugsweise ist die Integritätsprüfung so gestaltet, daß eine Manipulation, bei der ein überwachter Schlüsselparameter in zufälliger Weise verfälscht wird, mit an Sicherheit grenzender Wahrscheinlichkeit, z.B. mit einer Wahrscheinlichkeit größer als $1\text{-}10^{-3}$ oder größer als $1\text{-}10^{-6}$ oder größer als $1\text{-}10^{-9}$, erkannt wird. Während die Integritätsüberprüfung in manchen Ausgestaltungen nur einzelne, besonders kritische Schlüsselparameter umfaßt, ist vorzugsweise vorgesehen, sämtliche Parameter eines geheimzuhaltenden Schlüssels zu überwachen. Für einzelne Parameter oder Parametergruppen können hierbei im Zuge der Integritätsüberprüfung unterschiedliche Prüfungsverfahren ausgeführt werden.

Die zur Integritätsüberprüfung eingesetzten Verfahren haben jeweils das Ziel, eine Verfälschung des überwachten Schlüsselparameters oder der überwachten Schlüsselparameter zu erkennen. In einer bevorzugten Ausgestaltung wird bei der Integritätsüberprüfung im Ergebnis ermittelt, ob sich ein Schlüsselparameter innerhalb eines zulässigen, mehrfach unterbrochenen Wertebereichs befindet: Diese Prüfungsart liegt in der Regel dann vor, wenn der Schlüsselparameter bei der Schlüsselerzeugung aus dem eigentlich für die kryptographische Berechnung benötigten Wert und einem zusätzlichen, an sich redundanten Sicherungswert berechnet wurde, wie dies z.B. bei Prüfsummenberechnungen der Fall ist.

Während es vorgesehen sein kann, manche oder alle Schlüsselparameter jeweils einzeln zu überprüfen, wird vorzugsweise bei der Integritätsüberprüfung ermittelt, ob mindestens zwei Schlüsselparameter in einer vorbestimmten Beziehung zueinander stehen. Die Integritätsüberprüfung kann eine multiplikative Operation beinhalten, worunter in der Wortwahl des vorliegenden Dokuments eine Multiplikation, eine Division, eine Potenzierung, eine Modulo-Berechnung und eine Teilbarkeitsprüfung zu verstehen sind.

Vorzugsweise wird überprüft, ob ein Schlüsselparameter oder ein davon abgeleiteter Wert glatt durch einen Sicherungswert teilbar ist. In diesem Fall wird der Schlüsselparameter bei der Schlüsselgenerierung vorzugsweise durch eine Multiplikation des eigentlich für die kryptographische Berechnung benötigten Wertes mit dem Sicherungswert gewonnen. Der Sicherungswert kann Bestandteil des Schlüssels oder fest vorgegeben sein.

Das erfindungsgemäße Verfahren ist für alle kryptographischen Berechnungen geeignet, bei denen ein kryptographischer Angriff durch Verfälschung mindestens eines ersten Schlüsselparameters Rückschlüsse auf mindestens einen zweiten Schlüsselparameter ermöglicht. Insbesondere ist die Erfindung für die Sicherung der Entschlüsselung oder Signaturerzeugung bei einem RSA-Verfahren, vorzugsweise bei einem RSA-CRT-Verfahren, vorgesehen. In diesen Fällen betrifft die Integritätsüberprüfung den privaten RSA-Schlüssel. Es ist zu erwarten, daß entsprechende Angriffsmöglichkeiten für weitere kryptographische Berechnungen gefunden werden, die dann ebenfalls auf die erfindungsgemäße Weise gesichert werden können.

In bevorzugten Ausgestaltungen wird bei der Integritätsprüfung ermittelt, ob ein bei einer Potenzierungsoperation verwendeter Exponent glatt durch einen Sicherungswert teilbar ist. Diese Ausführungsformen der Erfindung lassen sich besonders vorteilhaft mit einem Exponenten-Verschleierungsverfahren kombinieren, wie es aus der internationalen Offenlegungsschrift WO 01/48974 A1 bekannt ist. In weiteren vorteilhaften Ausgestaltungen werden - alternativ oder zusätzlich zu der gerade genannten Exponentenverschleierung - die Primfaktoren des RSA-Verfahrens mit einem Verschleierurigsparameter multipliziert, so daß das Berechnungsergebnis mittels einer Gleichheitsüberprüfung modulo des Verschleierungsparameters auf seine Korrektheit überprüft werden kann.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, beispielsweise ein Halbleiterspeicher oder eine Diskette oder eine CD-ROM, auf dem ein Programm zur Ausführung eines erfindungsgemäßen Verfahrens gespeichert ist. Das Computerprogrammprodukt kann jedoch auch ein nicht-körperliches Medium sein, beispielsweise ein über ein Computernetzwerk übermitteltes Signal. Das Computerprogrammprodukt kann insbesondere zur Verwendung im Zusammenhang mit der Herstellung und/oder Initialisierung und/oder Personalisierung von Chipkarten oder sonstigen Datenträgern vorgesehen sein.

In bevorzugten Ausgestaltungen sind das Computerprogrammprodukt und/oder der tragbare Datenträger mit Merkmalen weitergebildet, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung mehrerer Ausführungsbeispiele und Ausführungsalternativen hervor. Es wird auf die schematischen Zeichnungen verwiesen, in denen zeigen:

Fig. 1 ein beispielhaftes Flußdiagramm eines Verfahrens zur Schlüsselberechnung mit Darstellung eines öffentlichen und eines privaten Schlüssels,

Fig. 2 ein beispielhaftes Flußdiagramm eines kryptographischen Berechnungsverfahrens,

Fig. 3 ein beispielhaftes Flußdiagramm eines Ausschnitts des Verfahrens von Fig. 2 in einer abgewandelten Ausgestaltung, und

Fig. 4 ein beispielhaftes Flußdiagramm eines weiteren Ausführungsbeispiels des kryptographischen Berechnungsverfahrens.

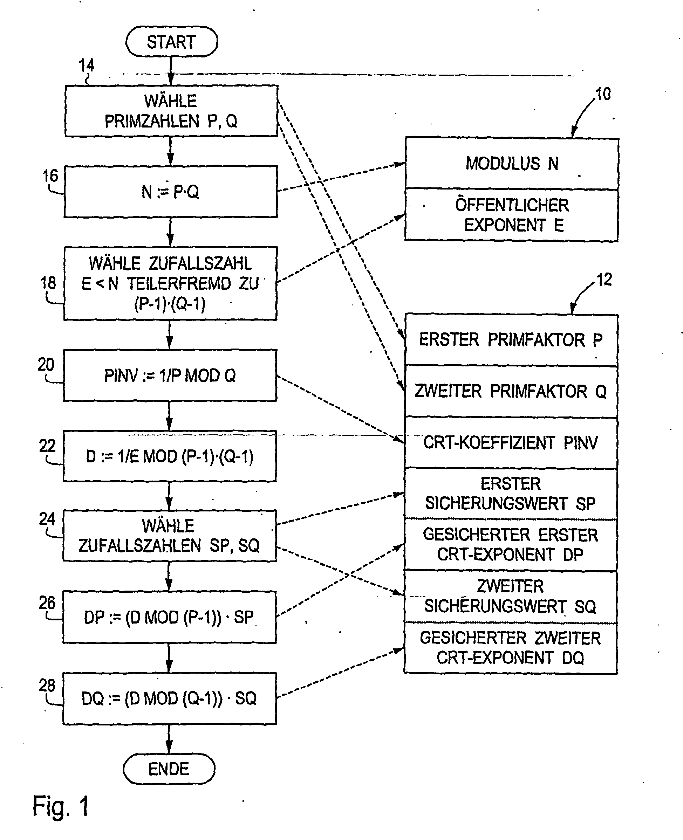

Das in Fig.1 dargestellte Verfahren dient zur Berechnung eines öffentlichen Schlüssels 10 und eines privaten Schlüssels 12, die zur Verwendung in einem RSA-Verfahren ausgestaltet sind. Die gestrichelten Pfeile geben jeweils an, welcher Schlüsselparameter durch welchen Verfahrensschritt erzeugt wird. Im Zusammenhang mit einer Verwendung des Schlüsselpaares 10, 12 durch tragbare Datenträger (z.B. Chipkarten) kann das Verfahren z.B. im Zuge der Initialisierung oder Personalisierung des Datenträgers in einer gesicherten Umgebung ausgeführt werden. Das extern berechnete Schlüsselpaar wird dann als Teil der Initialisierungs- oder Personalisierungsdaten in den Datenträger übertragen. Alternativ ist es auch möglich, daß das Verfahren von Fig. 1 durch den Datenträger selbst ausgeführt wird, um das Schlüsselpaar zu bestimmen.

Der öffentliche Schlüssel 10 weist als Schlüsselparameter einen Modulus n und einen öffentlichen Exponenten e auf. Der private Schlüssel 12 ist für RSA-Berechnungen unter Verwendung des Chinesischen Restklassensatzes vorgesehen, die hier auch als RSA-CRT-Berechnungen (CRT = Chinese remainder theorem) bezeichnet werden. Als Schlüsselparameter weist der private Schlüssel 12 einen ersten und einen zweiten Primfaktor p, q, einen CRT-Koeffizienten pinv, einen ersten und einen zweiten Sicherungswert sp, sq sowie einen gesicherten ersten und einen gesicherten zweiten CRT-Exponenten dp, dq auf.

Das in Fig.1 dargestellte Verfahren beginnt in an sich bekannter Weise in Schritt 14 mit der zufälligen Auswahl zweier Primzahlen mit einer Länge von z.B. je 1024 oder 2048 Bit, die als erster und zweiter Primfaktor p, q im privaten Schlüssel 12 gespeichert werden. Im darauffolgenden Schritt 16 wird der Modulus n des öffentlichen Schlüssels 10 als Produkt der beiden Primfaktoren p, q berechnet. Der öffentliche Exponent e wird in Schritt 18 als Zufallszahl bestimmt, die teilerfremd zum Wert (p-1)·(q-1) ist. Da im vorliegenden Ausführungsbeispiel der private Schlüssel 12 auf RSA-CRT-Berechnungen zugeschnitten ist, wird in Schritt 20 das modulare Inverse von p modulo q berechnet und als CRT-Koefizient pinv in den privaten Schlüssel 12 aufgenommen.

In Schritt 22 wird der Wert d als modulares Inverses des öffentlichen Exponenten e modulo (p-1)·(q-1) berechnet. In RSA-Verfahren, die den Chinesischen Restklassensatz nicht einsetzen, wäre d als privater Exponent der Hauptbestandteil des privaten Schlüssels. In bekannten RSA-CRT-Verfahren würden statt d die beiden CRT-Exponenten d mod (p-1) und d mod (q-1) verwendet werden. Im vorliegenden Ausführungsbeispiel enthält der private Schlüssel 12 dagegen Werte, die aus den genannten CRT-Exponenten d mod (p-1) und d mod (q-1) durch eine zusätzliche Sicherungsmaßnahme abgeleitet sind. Diese Sicherungsmaßnahme ist hier beispielhaft die Multiplikation mit je einem Sicherungswert. Eine Manipulation der gesicherten Werte kann dann durch eine Teilbarkeitsüberprüfung festgestellt werden. In Ausführungsalternativen sind andere Sicherungsmaßnahmen vorgesehen, z.B. eine Prüfsummenbildung oder die mehrfache Übergabe von zumindest den wichtigen Übergabeparametern.

Als Sicherungswerte sp, sq werden in Schritt 24 zwei Zufallszahlen mit einer Länge von beispielsweise je 64 Bit (8 Byte) erzeugt. Der gesicherte erste CRT-Exponent dp wird in Schritt 26 gemäß dp := (d mod (p-1)) · sp berechnet. Entsprechend wird der gesicherte zweite CRT-Exponent dq in Schritt 28 durch die Berechnung dq := (d mod (q-1)) · sq bestimmt. Die genannten Werte werden sämtlich als Parameter des privaten Schlüssels 12 abgespeichert. Damit ist die Bestimmung eines gegen Manipulationen geschützten privaten Schlüssels 12 beendet.

Im vorliegenden Ausführungsbeispiel liegt der private Schlüssel 12 im wesentlichen in Form einer Datenstruktur RSAPrivateCRTKey gemäß den Konventionen der Java-Card-Anwendungsprogrammierungsschnittstelle vor. Diese Konventionen sind im Dokument "Java Card™ 2.1.1 Application Programming Interface", Revision 1.0, 18. Mai 2000, herausgegeben von Sun Microsystems, Inc., USA, gegenwärtig verfügbar unter http://java.sun.com/products/javacard/javacard21.html, beschrieben. Die dort vorgesehene Datenstruktur weist Felder DP1 und DQ1 für die ungesicherten CRT-Exponenten d mod (p-1) und d mod (q-1) auf. Um den privaten Schlüssel 12 gemäß dem vorliegenden Ausführungsbeispiel in einer derartigen Datenstruktur unterzubringen, ist im vorliegenden Ausführungsbeispiel vorgesehen, daß die Werte sp und dp zusammen in dem Feld DP1 des RSAPrivateCRTKey gespeichert werden, und daß entsprechend die Werte sq und dq zusammen in dem Feld DQ1 gespeichert werden. In Fig. 1 ist dies durch gepunktete Linien angedeutet. In Ausführungsvarianten können die Werte sq und dq auch in anderen Feldern des RSAPrivateCRTKey oder außerhalb dieser Datenstruktur abgelegt werden.

Die hier beschriebenen Ausführungsbeispiele weichen insofern geringfügig von der oben genannten Java-Card-Spezifikation ab, als vorliegend das modulare Inverse von p modulo q als CRT-Koefizient pinv im privaten Schlüssel 12 enthalten ist. Gemäß der Java-Card-Spezifikation wird dagegen ein CRT-Koeffizient PQ verwendet, der das modulare Inverse von q modulo p ist. Es sind Abwandlungen der hier beschriebenen Verfahren vorgesehen, bei denen der CRT-Koeffizient PQ entsprechend der Java-Card-Spezifikation Bestandteil des privaten Schlüssels 12 ist. Die erfindungsgemäßen Ideen sind auch für derartige Ausgestaltungen ohne wesentliche Veränderung einsetzbar.

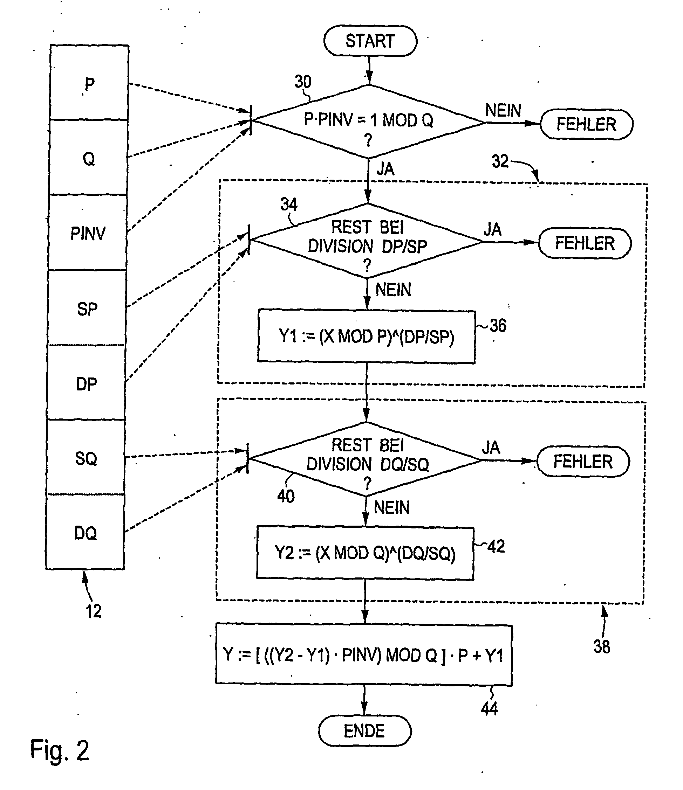

Fig. 2 zeigt eine erste Ausgestaltung eines gesicherten RSA-CRT-Verfahrens, das zur Entschlüsselung oder Signaturerzeugung dient. Das Verfahren ist dazu vorgesehen, von einem Prozessor eines tragbaren Datenträgers, insbesondere einer Chipkarte (smart card) oder eines Chipmoduls, ausgeführt zu werden. Das Verfahren ist dazu in Form von Programmbefehlen für diesen Prozessor implementiert, die in einem ROM oder EEPROM des Datenträgers gespeichert sind. Der zur Entschlüsselung oder Signaturerzeugung benötigte private Schlüssel 12 ist ebenfalls im EEPROM des Datenträgers gespeichert.

Beim Verfahrensaufruf wird ein Zeiger auf den privaten Schlüssel 12 an die aufgerufene Entschlüsselungs- oder Signaturerzeugungsroutine übergeben. Die Erfinder haben erkannt, daß ein kryptographischer Angriff dadurch ausgeführt werden kann, daß einzelne Parameter des privaten Schlüssels 12 vor Beginn der Entschlüsselung oder Signaturerzeugung manipuliert werden. Dies kann z.B. durch gezielte Einwirkung auf das den privaten Schlüssel 12 enthaltende EEPROM oder durch Übergabe einer fehlerhaften Adresse an die RSA-CRT-Routine geschehen. Ein derartiger Angriff hätte die äußerst nachteilige Konsequenz, daß sich aus dem Berechnungsergebnis - z. B. den entschlüsselten Daten oder der erzeugten Signatur - Rückschlüsse auf die Werte der geheimen Schlüsselparameter ziehen ließen. Dadurch wäre das Schlüsselpaar 10, 12 für alle bisherigen und zukünftigen Berechnungen kompromittiert.

Um einen derartigen kryptographischen Angriff zu verhindern, ist bei dem Verfahren von Fig. 2 eine Integritätsüberprüfung des privaten Schlüssels 12 vorgesehen, die eine Folge von mehreren Teilprüfungen beinhaltet. In Fig. 2 ist durch die gestrichelten Pfeile angedeutet, welche Schlüsselparameter in die jeweiligen Teilprüfungen eingehen.

Das Verfahren beginnt in Schritt 30 mit der Teilprüfung, ob der im privaten Schlüssel 12 enthaltene CRT-Koeffizient pinv tatsächlich das modulare Inverse zum ersten Primfaktor p modulo des zweiten Primfaktors q darstellt. Mit anderen Worten wird überprüft, ob die vorgegebene Beziehung p·pinv =1 mod q erfüllt ist. Ist dies nicht der Fall, so erfolgt ein Fehlerausprung, und das Verfahren wird abgebrochen. Ist die Überprüfung erfolgreich, so kann davon ausgegangen werden, daß die Schlüsselparameter p, q und pinv nicht manipuliert worden sind, und das Verfahren wird fortgesetzt.

Im nun folgenden Berechnungsmodul 32 wird als Ergebnis des ersten der beiden CRT-Berechnungszweige ein erster Hilfswert y1 bestimmt. In diese Berechnung gehen die zu entschlüsselnden oder zu signierenden Daten x, der erste Primfaktor p und der erste CRT-Exponent d mod p-1 ein, wobei der letztgenannte Wert nicht unmittelbar zur Verfügung steht, sondern aus dem gesicherten ersten CRT-fixponenten dp und dem ersten Sicherungswert sp abgeleitet werden muß.

Zur Überprüfung, ob einer der beiden Werte sp, dp manipuliert worden ist, wird zunächst in Schritt 34 eine Teilbarkeitsprüfung vorgenommen. Falls der gesicherte erste CRT-Exponent dp nicht glatt durch den ersten Sicherungswert sp teilbar ist, erfolgt wiederum ein Fehlerausprung und Verfahrensabbruch. Wenn dagegen die Division ohne Rest aufgeht, kann mit an Sicherheit grenzender Wahrscheinlichkeit angenommen werden, daß zumindest keine zufällige Verfälschung eines der beiden Schlüsselparameter sp und dp stattgefunden hat. Diese Teilbarkeitsprüfung stellt nur einen geringen zusätzlichen Rechenaufwand dar, da der Sicherungswert sp nur eine relativ geringe Bitlänge aufweist. Eine gezielte Manipulation der beiden Parameter sp und dp unter Kenntnis des vorgesehenen Sicherungsmechanismus könnte durch das hier beschriebene Verfahren natürlich nicht entdeckt werden; es ist aber gegenwärtig nicht vorstellbar, wie ein Angreifer ein derartiges gezieltes Einschreiben neuer Werte in einzelne EEPROM-Zellen des Datenträgers bewerkstelligen könnte.

Wenn die Integritätsüberprüfung hinsichtlich der Parameter sp und dp in Schritt 34 erfolgreich war, wird in Schritt 36 die eigentliche Berechnung des ersten Hilfswerts y1 gemäß $y1 := (x \bmod p)^{(dp/sp)}$ ausgeführt. Hierbei kann hinsichtlich des Exponenten dp/sp natürlich in der Regel auf das bereits in Schritt 34 berechnete Divisionsergebnis zurückgegriffen werden. Da das Sicherungsverfahren im vorliegenden Ausführungsbeispiel einfach aus einer Multiplikation mit dem ersten Sicherungswert sp bestand - siehe Schritt 26 in Fig. 1-, gilt dp/sp = d mod (p-1) und somit y1 = $(x \bmod p)^{(d \bmod (p-1))}$. Dies ist das gewünschte Ergebnis des ersten CRT-Berechnungszweigs.

Ein zweites Berechnungsmodul 38 entspricht dem zweiten CRT-Berechnungszweig. Das Verfahren läuft ebenso wie im ersten Berechnungsmodul 32 ab, wobei jedoch der zweite Primfaktor q, der zweite Sicherungswert sq und der gesicherte zweite CRT-Exponent dq herangezogen werden. In Schritt 40 folgt wiederum die Integritätsüberprüfung hinsichtlich der Schlüsselparameter sq und dq, und in Schritt 42 wird der zweite Hilfswert y2 gemäß der Formel $y2 := (x \bmod q)^{(dq/sq)}$ berechnet.

In dem das Verfahren abschließenden Berechnungsschritt 44 wird das Gesamtergebnis y, also die entschlüsselten Daten oder die berechnete Signatur, auf an sich bekannte Weise durch Kombination der beiden CRT-Hilfswerte y1 und y2 bestimmt. Die hier durchgeführte Berechnung läßt sich formelmäßig als $y := (((y2 - y1) \cdot pinv) \bmod q) \cdot p + y1$ ausdrücken. Für die vom Prozessor des Datenträgers vorgenommenen Berechnungsschritte können natürlich unterschiedliche Auswertungsreihenfolgen gewählt werden. Generell sind aus der Literatur unterschiedliche Varianten der RSA-CRT-Berechnungen der Schritte 36, 42 und 44 bekannt, die sich insbesondere dahingehend unterscheiden, auf welche Weise Zwischenergebnisse auf die jeweiligen Modulo-Bereiche reduziert werden. Die erfindungsgemäße Idee der Integritätsüberprüfung und die im vorliegenden Ausführungsbeispiel vorgeschlagene multiplikative Sicherung der CRT-Exponenten dp und dq können mit allen diesen Varianten kombiniert werden.

Die Integritätsprüfung gemäß der vorliegenden Erfindung richtet sich insbesondere gegen einen kryptographischen Angriff, der zeitlich vor den RSA-Berechnungen - spätestens während der Parameterübergabe an die RSA-Routine - ausgeführt wird. Die Prüfung bei der Parameterübergabe kann in einfacher Weise auch erfolgen, indem neben den Übergabeparametern auch noch damit verbundene redundante Information, beispielsweise in Form von Prüfsummen abgespeichert ist, und nach der Parameterübergabe eine abgespeicherte Prüfsumme mit einer neu über die übergebenen Parameter errechneten Prüfsumme verglichen wird. Alternativ können zumindest wichtige Übergabeparameter mehrfach übergeben und nach der Übergabe auf Identität geprüft werden.

Es sind weitere Angriffsverfahren bekannt, die auf eine Ausspähung der einzelnen Berechnungsschritte abzielen, um Rückschlüsse auf geheimzuhaltende Schlüsselparameter zu ermöglichen. Insbesondere die Exponentenbildung in den Schritten 36 und 42 ist solchen Angriffen ausgesetzt, weil bei üblichen Implementierungen der Potenzierungsoperation die Prozessoraktivität während des Berechnungsablaufs erheblich von der Bitfolge des Exponenten abhängt. Diese Prozessoraktivität kann durch Messung des Stromverbrauchs (SPA = simple power analysis oder DPA = differential power analysis) oder anderer Signale wie z.B. elektrischer Feldstärken ausgespäht werden.

Zum Schutz gegen derartige Angriffe ist in der internationalen Patentveröffentlichung WO 01/48974 A1 vorgeschlagen worden, den Exponenten mit Rest durch eine Zufallszahl zu teilen und statt einer einzigen Potenzierungsoperation drei getrennte Potenzierungen vorzunehmen, wobei als Exponenten der ganzzahlige Quotient, die Zufallszahl sowie der bei der Teilung ermittelte Rest verwendet werden. Dieses Verfahren ist im Detail in der genannten Patentveröffentlichung beschrieben, deren Inhalt hiermit vollständig in das vorliegende Dokument aufgenommen wird.

Es ist ein besonderer Vorteil des Sicherungsverfahrens gemäß der vorliegenden Erfindung, daß sich dieses leicht mit dem auch als "exponent blinding" bezeichneten Verschleierungsverfahren gemäß der WO 01/48974 A1 kombinieren läßt, wobei sich insbesondere die für das Verschleierungsverfahren sowieso benötigte Division auch für das Sicherungsverfahren gemäß der vorliegenden Erfindung nutzen läßt. Das erfindungsgemäße Verfahren kann dadurch mit sehr geringem Mehraufwand implementiert werden.

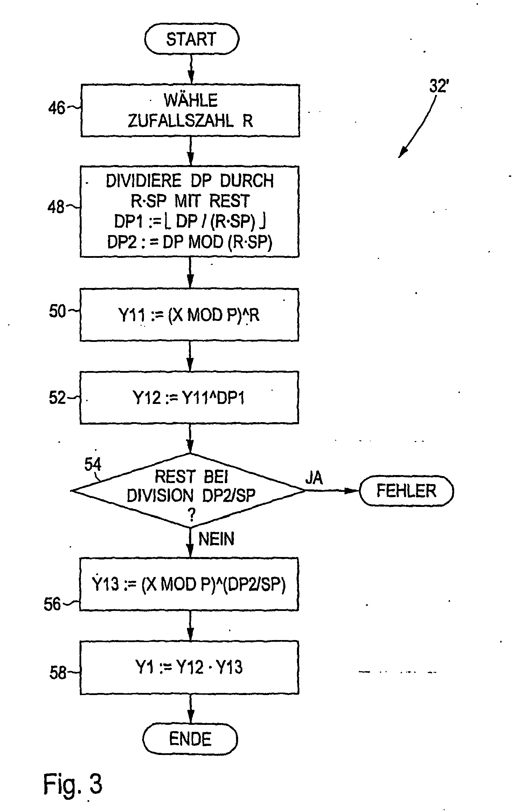

Fig. 3 zeigt die Verfahrensschritte eines Berechnungsmoduls 32', das gegenüber dem Berechnungsmodul 32 von Fig. 2 so abgewandelt ist, daß es zusätzlich die aus der WO 01/48974 A1 an sich bekannte Technik der Exponenten-Verschleierung anwendet. Hierzu wird zunächst in Schritt 46 eine Zufallszahl r mit einer Länge von beispielsweise 64 Bit (8 Byte) gewählt. In Schritt 48 wird eine Division mit Rest durchgeführt, um den gesicherten CRT-Exponenten dp in die Faktoren dp1 und r·sp sowie den Rest dp2 aufzuteilen; es gilt dp = dp1·r·sp + dp2. Im Gegensatz zu dem aus WO 01/48974 A1 bekannten Verfahren wird in Schritt 48 also als Divisor nicht die Zufallszahl r, sondern der Wert r·sp verwendet.

In den Schritten 50 und 52 werden nun die ersten beiden Potenzierungsoperationen vorgenommen, indem der Basiswert x mod p zunächst mit der Zufallszahl r und das so erhaltene Zwischenergebnis y11 dann mit dem ganzzahligen Quotienten dp1 potenziert werden. Für das Ergebnis y12 gilt somit $y12 = ((x \bmod p)^{r})^{dp1} = (x \bmod p)^{(r \cdot dp1)}$. Der Sicherungswert sp ist in die, Schritte 50 und 52 nicht eingeflossen, da insoweit die zur Sicherung des CRT-Exponenten dp dienende Multiplikation bereits im Zusammenhang mit der Division 48 rückgängig gemacht wurde.

In Schritt 54 erfolgt nun - analog zu Schritt 34 in Fig. 2 - eine Teilbarkeitsprüfung, um die Integrität der Schlüsselparameter sp und dp sicherzustellen. Im Gegensatz zu Schritt 34 in Fig. 2 wird hierbei jedoch nicht der gesicherte CRT-Exponent dp, sondern der Divisionsrest dp2 durch sp geteilt. Da sich dp2 von dp nur durch ein Vielfaches von r·sp - und somit durch ein Vielfaches von sp - unterscheidet, sind die beiden Überprüfungen gleichwertig. Der durch die Ausführung von Schritt 54 entstehende Berechnungsaufwand ist jedoch wegen des erheblich kürzeren Dividenden dp2 erheblich geringer als bei der Berechnung von Schritt 34 in Fig. 2. Überdies wird das ganzzahlige Divisionsergebnis dp2/sp im folgenden Schritt 56 benötigt. Die Division und Teilbarkeitsprüfung in Schritt 54 stellt im Vergleich zu dem bekannten Verfahren gemäß WO 01/48974 A1 den einzigen zusätzlichen Rechenaufwand dar.

Falls dp2 kein glattes Vielfaches von sp ist, wird das Verfahren in Schritt 54 mit einem Fehlerausprung abgebrochen. Andernfalls wird in Schritt 56 ein weiterer Zwischenwert y13 gemäß y13:= (x mod p)^(dp2/sp) berechnet. Als Ergebnis y1 des Berechnungsmoduls 32' wird in Schritt 58 das Produkt y12·y13 bestimmt. Dieses Ergebnis ist identisch mit dem ersten Hilfswert y1 gemäß Schritt 36 von Fig. 2, weil gilt:

$$
\begin{aligned}
y1 &= y12 \cdot y13 \\
&= ((x \bmod p)^{\wedge}(r \cdot dp1)) \cdot ((x \bmod p)^{\wedge}(dp2/sp)) \\
&= (x \bmod p)^{\wedge}((r \cdot dp1)+(dp2/sp)) \\
&= (x \bmod p)^{\wedge}(dp/sp)
\end{aligned}
$$

Das gesamte RSA-CRT-Verfahren in der hier beschriebenen, besonders geschützten Ausführungsvariante beginnt mit einer Integritätsüberprüfung der Parameter p, q und pinv durch den in Fig. 2 gezeigten Schritt 30. Darauf folgen als erster CRT-Berechnungszweig die Schritte des Berechnungsmoduls 32' gemäß Fig. 3, um den ersten Hilfswert y1 zu ermitteln. Zur Berechnung des zweiten Hilfswerts y2 wird ebenfalls das in Fig. 3 gezeigte Verfahren eingesetzt, wobei natürlich die Schlüsselparameter p, sp und dp durch q, sq und dq ersetzt werden. Die Zufallszahl r kann entweder aus dem ersten Ablauf des Berechnungsmoduls 32' übernommen oder neu bestimmt werden. Das Endergebnis y wird schließlich durch eine Kombination der beiden Hilfswerte y1 und y2 wie in Schritt 44 von Fig. 2 berechnet.

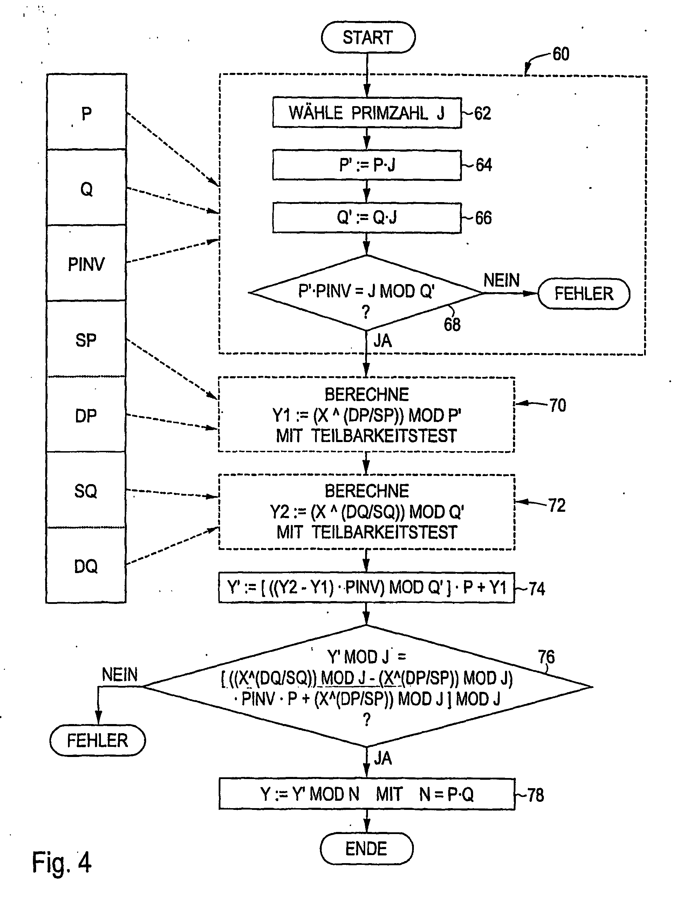

Das in Fig. 4 gezeigte Verfahren sieht einen zusätzlichen Überprüfungsschritt vor, in dem ein weiterer Verschleierungsparameter j herangezogen wird. Ein erster Berechnungsblock 60 entspricht ungefähr Schritt 30 in Fig. 2. In Schritt 62 wird der Verschleierungsparameter j als zufällige Primzahl mit einer Länge von beispielsweise 32 Bit (4 Byte) gewählt. Die Primfaktoren p und q werden in den Schritten 64 und 66 mit dem Verschleierungsparameter j multipliziert, um verschleierte Primfaktoren p' bzw. q' zu erhalten. In Schritt 68 erfolgt ein Test, um die Integrität der Schlüsselparameter p, q und pinv zu überprüfen. Falls p'·pinv = j mod q' gilt; wird das Verfahren fortgesetzt; andernfalls erfolgt ein Fehleraussprung.

In einem zweiten Berechnungsblock 70 wird ein erster Hilfswert y1 gemäß der Formel y1 := (x^(dp/sp)) mod p' bestimmt. Der erste Hilfswert y1 entspricht im wesentlichen dem ersten Hilfswert der Ausführungsbeispiele von Fig. 2 und Fig. 3, wobei jedoch p' statt p für die Modulo-Berechnung herangezogen wird. Im Detail erfolgt die Berechnung in unterschiedlichen Ausführungsvarianten entweder wie im Berechnungsmodul 32 von Fig. 2 oder wie im Berechnungsmodul 32' von Fig. 3. In beiden Fällen wird eine Teilbarkeitsprüfung durchgeführt, um die Integrität der Schlüsselparameter sp und dp sicherzustellen.

Ein dritter Berechnungsblock 72 entspricht dem zweiten Berechnungsblock 70 mit dem Unterschied, daß statt dp, sp und p' die Werte dq, sq und q' herangezogen werden, um einen zweiten Hilfswert y2 zu berechnen. Wiederum kann der dritte Berechnungsblock 72 entweder wie das Berechnungsmodul 38 in Fig. 2 oder analog der Darstellung von Fig. 3 ausgestaltet sein. Durch einen Teilbarkeitstest im dritten Berechnungsblock 72 wird die Integrität der Schlüsselparameter sq und dq überprüft.

Schritt 74 betrifft die Berechnung eines Zwischenergebnisses y' vermöge der Formel y' := [((y2 - y1) · pinv) mod q'] · p + y1. Dies entspricht ungefähr Schritt 44 in Fig. 2. In Schritt 76 erfolgt ein weiterer Test, der die bisherigen Berechnungen miteinander in Beziehung setzt und gestörte Berechnungsabläufe erkennt. Es wird überprüft, ob die folgende Gleicliheitsbeziehung modulo j gilt:

$$
\begin{aligned}
y' \bmod j = [ \quad &((x^{\wedge}(dq/sq)) \bmod j - (x^{\wedge}(dp/sp)) \bmod j) \cdot pinv \cdot p \\
&+ (x^{\wedge}(dp/sp)) \bmod j \; ] \bmod j
\end{aligned}
$$

Falls diese Gleichung nicht erfüllt ist, erfolgt ein Fehlerabbruch. Andernfalls wird das Verfahren in Schritt 78 mit der Berechnung des Endergebnisses y gemäß y := y' mod n abgeschlossen, wobei n der Modulus mit n = p.q ist. Durch die weitere Überprüfung des Berechnungsverlaufs in Schritt 76 wird bei dem Verfahren gemäß Fig. 4 ein nochmals verbesserter Schutz gegen kryptographische Angriffe erreicht.

**Patentansprüche**

1. Verfahren zum geschützten Ausführen einer kryptographischen Berechnung, bei der ein Schlüssel (12) mit mindestens zwei Schlitsselparametern (p, q, pinv, sp, dp, sq, dq) herangezogen wird, wobei bei dem Verfahren eine Integritätsüberprüfung (30, 34, 40, 54) des Schlüssels (12) durchgeführt wird, um einen kryptographischen Angriff zu verhircdern, bei dem durch eine Verfälschung mindestens eines ersten Schlüsselparameters (p, q, pinv, sp, dp, sq, dq) Rückschlüsse auf mindestens einen zweiten Schlüsselparameter (p, q, pinv, sp, dp, sq, dq) gezogen werden, **dadurch gekennzeichnet, daß** mindestens ein Schlüsselparameter (dp, dq) das Produkt eines für die kryptographische Berechnung benötigten Wertes mit einem Sicherungswert (sp, sq) ist, und daß die Integritätsüberprüfung (30, 34, 40, 54) eine Teilbarkeitsprüfung beinhaltet.

2. Verfahren nach Anspruch 1, **dadurch gekennzeichnet, daß** der Sicherungswert (sp, sq) als Schlüsselparameter in dem Schlüssel (12) enthalten ist.

3. Verfahren nach Anspruch 1 oder Anspruch 2, **dadurch gekennzeichnet, daß** die kryptographische Berechnung ein RSA-CRT-Verfahren ist und daß der für die kryptographische Berechnung benötigte Wert ein CRT-Exponent ist, wobei das Produkt dieses CRT-Exponenten mit dem Sicherungswert (sp, sq) als gesicherter CRT-Exponent (dp, dq) in dem Schlüssel (12) enthalten ist.

4. Verfahren nach einem der Ansprüche 1 bis 3, **dadurch gekennzeichnet, daß** bei der Integritätsprüfung (30, 34, 40, 54) geprüft wird, ob ein Schlüsselparameter (p, q, pinv, sp, dp, sq, dq) oder ein Wert, der sich von dem Schlüsselparameter (p, q, pinv, sp, dp, sq, dq) um ein Vielfaches des Sicherungswertes (sp, sq) unterscheidet, glatt durch den Sicherungswert (sp, sq) teilbar ist.

5. Verfahren nach einem der Ansprüche 1 bis 4, **dadurch gekennzeichnet, daß** bei der Integritätsüberprüfung eine mit den Schlüsselparametern (p, q, pinv, sp, dp, sq, dq) abgespeicherte Prüfsumme mit einer nach der Übergabe der Schlüsselparameter (p, q, pinv, sp, dp, sq, dq) neu berechneten Prüfsumme verglichen wird.

6. Verfahren nach einem der Ansprüche 1 bis 5, **dadurch gekennzeichnet, daß** zur Prüfung der Integrität wichtige Übergabeparameter mehrfach übergeben und nach der Übergabe auf Identität geprüft werden.

7. Verfahren nach einem der Ansprüche 1 bis 6, **dadurch gekennzeichnet, daß** die kryptographische Berechnung eine Entschlüsselung oder-Signaturerzeugung gemäß einem RSA-Verfahren, insbesondere einem RSA-CRT-Verfahren, ist.

8. Verfahren nach Anspruch 7, **dadurch gekennzeichnet, daß** bei der kryptographischen Berechnung mindestens eine Potenzierungsoperation durchgeführt wird, und daß bei der Integritätsprüfung (30, 34, 40, 54) geprüft wird, ob der bei der Potenzierungsoperation verwendete Exponent sich als glatter Quotient einer Division eines Wertes durch einen Sicherungswert (sp, sq) ergibt.

9. Verfahren nach Anspruch 8, **dadurch gekennzeichnet, daß** bei der kryptographischen Berechnung ein Exponenten-Verschleierungsverfahren zum Ausspähungsschutz angewendet wird.

10. Verfahren nach einem der Ansprüche 7 bis 9, **dadurch gekennzeichnet, daß** die Primfaktoren (p, q) des RSA-Verfahrens mit einem Verschleierungsparameter (j) multipliziert werden, und daß die Fehlerfreiheit des Berechnungsverlaufs durch eine Gleichheitsüberprüfung modulo des Verschleierungsparameters (j) überprüft wird.

11. Verfahren zum Bestimmen eines Schlüssels für eine kryptographische Berechnung mit mindestens zwei Schlüsselparametern (p, q, pinv, sp, dp, sq, dq), wobei der Schlüssel zur Verwendung in einem Verfahren nach einem der Ansprüche 1 bis 10 vorgesehen ist.

12. Computerprogrammprodukt, das Programmbefehle aufweist, um einen Prozessor zu veranlassen, ein Verfahren mit den Merkmalen eines der Ansprüche 1 bis 11 auszuführen.

**13.** Tragbarer Datenträger, insbesondere Chipkarte oder Chipmodul, der zur Ausführung eines Verfahrens mit den Merkmalen eines der Ansprüche 1 bis 11 eingerichtet ist.

**Claims**

**1.** A method for protected execution of a cryptographic calculation, in which a key (12) with at least two key parameters (p, q, pinv, sp, dp, sq, dq) is drawn on, wherein an integrity check (30, 34, 40, 54) of the key (12) is performed in the method, in order to prevent a cryptographic attack in which conclusions are drawn as to at least one second key parameter (p, q, pinv, sp, dp, sq, dq) by corrupting at least one first key parameter (p, q, pinv, sp, dp, sq, dq), **characterized in that** at least one key parameter (dp, dq) is the product of a value required for the cryptographic calculation times a safeguard value (sp, sq), and **in that** the integrity check (30, 34, 40, 54) includes a divisibility check.

**2.** A method as claimed in claim 1, **characterized in that** the safeguard value (sp, sq) is contained in the key (12) as a key parameter.

**3.** A method as claimed in claim 1 or claim 2, **characterized in that** the cryptographic calculation is an RSA-CRT method, and **in that** the value required for the cryptographic calculation is a CRT exponent, wherein the product of this CRT exponent times the safeguard value (sp, sq) is contained in the key (12) as a safeguarded CRT exponent (dp, dq).

**4.** A method as claimed in one of claims 1 to 3, **characterized in that** in the integrity check (30, 34, 40, 54) it is checked whether a key parameter (p, q, pinv, sp, dp, sq, dq) or a value which differs from the key parameter (p, q, pinv, sp, dp, sq, dq) by a multiple of the safeguard value (sp, sq) is evenly divisible by the safeguard value (sp, sq).

**5.** A method as claimed in one of claims 1 to 4, **characterized in that** in the integrity check a checksum stored with the key parameters (p, q, pinv, sp, dp, sq, dq) is compared with a checksum newly calculated after passing of the key parameters (p, q, pinv, sp, dp, sq, dq).

**6.** A method as claimed in one of claims 1 to 5, **characterized in that**, to check the integrity, important parameters to be passed are multiply passed and checked for identity after passing.

**7.** A method as claimed in one of claims 1 to 6, **characterized in that** the cryptographic calculation is a decryption or signature generation according to an RSA method, in particular an RSA-CRT method.

**8.** A method as claimed in claim 7, **characterized in that** in the cryptographic calculation at least one exponentiation operation is performed and in the integrity check (30, 34, 40, 54) it is checked whether the exponent used in the exponentiation operation results as an integer quotient of a division of a value by a safeguard value (sp, sq).

**9.** A method as claimed in claim 8, **characterized in that** in the cryptographic calculation an exponent blinding method is applied for protection against spying.

**10.** A method as claimed in one of claims 7 to 9, **characterized in that** the prime factors (p, q) of the RSA method are multiplied by a masking parameter (j) and the error freedom of the calculation sequence is checked by an equality check modulo the masking parameter (j).

**11.** A method for determining a key for a cryptographic calculation with at least two key parameters (p, q, pinv, sp, dp, sq, dq), wherein the key is provided for use in a method as claimed in one of claims 1 to 10.

**12.** A computer program product which has program commands to cause a processor to execute a method with the features of one of claims 1 to 11.

**13.** A portable data carrier, in particular a smart card or chip module, set up for executing a method with the features of one of claims 1 to 11.

**Revendications**

1. Procédé pour une exécution protégée d'un calcul cryptographique, dans lequel on utilise un code (12) comprenant au moins deux paramètres de code (p, q, pinv, sp, ds, sq, dq), un contrôle d'intégrité (30, 34, 40, 54) du code (12) étant effectué dans le procédé pour empêcher une attaque cryptographique, dans lequel des conclusions sont tirées sur au moins un second paramètre de code (p, q, pinv, sp, ds, sq, dq) par une altération d'au moins un premier code de paramètre (p, q, pinv, sp, ds, sq, dq), **caractérisé en ce qu'**au moins un paramètre de code (dp, dq) est le produit d'une valeur utilisée pour le calcul cryptographique par une valeur de sécurité (sp, sq) et **en ce que** le contrôle d'intégrité (30, 34, 40, 54) contient un contrôle de divisibilité.

2. Procédé selon la revendication 1, **caractérisé en ce que** la valeur de sécurité (sp, sq) est incluse en tant que paramètre de code dans le code.

3. Procédé selon la revendication 1 ou la revendication 2, **caractérisé en ce que** le calcul cryptographique est un procédé RSA-CRT et **en ce que** la valeur utilisée pour le calcul cryptographique est un exposant CRT, le produit de cet exposant CRT par la valeur de sécurité (sp, sq) est inclus en tant qu'exposant CRT . (dp, dq) sécurisé dans le code (12).

4. Procédé selon l'une quelconque des revendications 1 à 3, **caractérisé en ce que**, lors du contrôle d'intégrité (30, 34, 40, 54), on vérifie si un paramètre de code (p, q, pinv, sp, ds, sq, dq) ou une valeur qui se différencie du paramètre de code (p, q, pinv, sp, ds, sq, dq) d'un multiple de la valeur de sécurité (p, sq) peut être divisé juste par la valeur de sécurité (sp, sq).

5. Procédé selon l'une quelconque des revendications 1 à 4, **caractérisé en ce que**, lors du contrôle d'intégrité, une somme d'essai mémorisée avec les paramètres de code (p, q, pinv, sp, dp, dq) est comparée avec une somme d'essai recalculée après la transmission des paramètres de code (p, q, pinv, sp, ds, sq, dq).

6. Procédé selon l'une quelconque des revendications 1 à 5, **caractérisé en ce que**, pour le contrôle d'intégrité, des paramètres de transfert importants sont transmis plusieurs fois et sont vérifiés au niveau de l'identité après la transmission.

7. Procédé selon l'une quelconque des revendications 1 à 6, **caractérisé en ce que** le calcul cryptographique est une génération de décision ou de signature selon un procédé RSA, en particulier un procédé RSA-CRT.

8. Procédé selon la revendication 7, **caractérisé en ce que**, lors du calcul cryptographique, on effectue au moins une opération d'élévation à une puissance et **en ce que**, lors du contrôle d'intégrité (30, 34, 40, 54), on vérifie si l'exposant utilisé lors de l'opération d'élévation à une puissance est obtenu comme quotient net d'une division d'une valeur par une valeur de sécurité (sp, sq).

9. Procédé selon la revendication 8, **caractérisé en ce que**, lors du calcul cryptographique, on applique un procédé de masquage d'exposant pour la protection contre l'espionnage.

10. Procédé selon l'une quelconque des revendications 7 à 9, **caractérisé en ce que** les facteurs premiers (p, q) du procédé RSA sont multipliés par un paramètre de masquage (j) et **en ce que** l'absence d'erreur lors de l'opération de calcul est vérifiée par un contrôle d'égalité par l'intermédiaire du paramètre de masquage (j).

11. Procédé pour la détermination d'un code pour un calcul cryptographique comprenant au moins deux paramètres de code (p, q, pinv, sp, ds, sq, dq), le code étant prévu pour l'utilisation dans un procédé selon l'une quelconque des revendications 1 à 10.

12. Produit de programme informatique, qui présente des instructions de programme afin de demander à un processeur d'appliquer un procédé présentant les caractéristiques de l'une des revendications 1 à 11.

13. Support de données portable, en particulier une carte à puce ou module à puce, qui est aménagée pour l'application d'un procédé présentant les caractéristiques de l'une des revendications 1 à 11.

START

WÄHLE
PRIMZAHLEN P, Q

$N := P \cdot Q$

WÄHLE ZUFALLSZAHL
E < N TEILERFREMD ZU
(P-1)·(Q-1)

$PINV := 1/P \; MOD \; Q$

$D := 1/E \; MOD \; (P-1) \cdot (Q-1)$

WÄHLE
ZUFALLSZAHLEN SP, SQ

$DP := (D \; MOD \; (P-1)) \cdot SP$

$DQ := (D \; MOD \; (Q-1)) \cdot SQ$

ENDE

MODULUS N

ÖFFENTLICHER
EXPONENT E

ERSTER PRIMFAKTOR P

ZWEITER PRIMFAKTOR Q

CRT-KOEFFIZIENT PINV

ERSTER
SICHERUNGSWERT SP

GESICHERTER ERSTER
CRT-EXPONENT DP

ZWEITER
SICHERUNGSWERT SQ

GESICHERTER ZWEITER
CRT-EXPONENT DQ

Fig. 1

START

~30

P·PINV = 1 MOD Q
?

NEIN → FEHLER

JA

~32

~34

REST BEI
DIVISION DP/SP
?

JA → FEHLER

NEIN

Y1 := (X MOD P)^(DP/SP)    ~36

REST BEI
DIVISION DQ/SQ
?

JA → FEHLER

40

NEIN

Y2 := (X MOD Q)^(DQ/SQ)    ~42

38

| P |
| Q |
| PINV |
| SP |
| DP |
| SQ |
| DQ |

12

Y := [ ((Y2 - Y1) · PINV) MOD Q ] · P + Y1

44

ENDE

Fig. 2

START

WÄHLE
ZUFALLSZAHL R

DIVIDIERE DP DURCH
R·SP MIT REST
$DP1 := \lfloor DP / (R·SP) \rfloor$
$DP2 := DP \bmod (R·SP)$

$Y11 := (X \bmod P)^R$

$Y12 := Y11^{DP1}$

REST BEI
DIVISION DP2/SP
?

JA → FEHLER

NEIN

$Y13 := (X \bmod P)^{(DP2/SP)}$

$Y1 := Y12 \cdot Y13$

ENDE

32'

Fig. 3

START

60

WÄHLE PRIMZAHL J ~62

P' := P·J ~64

Q' := Q·J ~66

P'·PINV = J MOD Q'
?
— NEIN → FEHLER
68
JA

BERECHNE
Y1 := (X ^ (DP/SP)) MOD P'
MIT TEILBARKEITSTEST
70

BERECHNE
Y2 := (X ^ (DQ/SQ)) MOD Q'
MIT TEILBARKEITSTEST
72

Y' := [ ((Y2 - Y1) · PINV) MOD Q' ] · P + Y1 ~74

Y' MOD J =
[ ((X^(DQ/SQ)) MOD J - (X^(DP/SP)) MOD J)
· PINV · P + (X^(DP/SP)) MOD J ] MOD J
?
76
NEIN → FEHLER
JA

Y := Y' MOD N    MIT   N = P·Q ~78

ENDE

P

Q

PINV

SP

DP

SQ

DQ

Fig. 4